# EUROPEAN PATENT APPLICATION

(11) **EP 4 640 995 A1**
(43) Date of publication of application: **29.10.2025**
(21) Application number: 25171217.0
(22) Date of filing: 17.04.2025
(51) Int. Cl.: F01L 1/047, F16C 3/02, F01L 1/08

(54) **ASSEMBLY OF A SHAFT AND AT LEAST TWO ACTION MEMBERS**

(30) Priority: 23.04.2024 CZ 20240158
(71) Applicant: VÚTS, a.s., Liberec XI - Ruzodol I 460 01 Liberec (CZ)
(72) Inventor: Ondrasek, Jiri, 460 07 Liberec, Liberec IX-Januv Dul (CZ)
(74) Representative: Musil, Dobroslav

(57) **Abstract**

The invention relates to an assembly of a shaft and at least two action members, each of which is provided with one conical polygonal contact surface, with which the action members are mounted on corresponding conical polygonal contact surfaces on the shaft for transmitting torque, wherein two of the conical polygonal contact surfaces on the shaft are deflected from each other with an inclination towards the adjacent ends of the shaft, wherein the at least two action members are mutually interconnected by at least one pulling means to pull the action members together and to press the action members with their conical polygonal contact surfaces onto the conical polygonal contact surfaces on the shaft.

## Description

### Technical field

The invention relates to an assembly of a shaft and at least two action members, each of which is provided with one conical polygonal contact surface by means of which the action members are mounted on corresponding conical polygonal contact surfaces on the shaft for transmitting torque, two of the conical polygonal contact surfaces on the shaft being deflected from each other with an inclination towards adjacent ends of the shaft.

### Background art

The movement of the working members of production and handling machines is determined by the technological function required. This working movement is ensured by mechanisms that in most cases transform the input, driving, rotational movement with a constant angular velocity into an uneven rotational or sliding, continuous or intermittent, unidirectional or reciprocating, movement of the working member at the output. This transformation is generally ensured by cam, joint or cam-joint mechanisms, which include shafts with action transmission members, such as cams, double cams, rocker arms, carousels equipped with contact pulleys, articulated transmission arms, etc. In highly dynamic and force-loaded applications and the transmission of large torques, the issue of the durability of the action members arises, together with the key requirement of high positional accuracy of the arrangement of the action members on the shafts of the transmission mechanisms.

Document CZ2015875A3 discloses a camshaft with a removable double cam, which is provided with a polygonal hub with at least one outer polygonal contact surface for accommodating a cam, which is provided with an inner conical polygonal contact surface. The cam is replaceably mounted on the outer conical polygon contact surface, thereby providing axial and radial seating of the cam. The cam is secured against spontaneous release and sliding off the polygonal hub by a locking ring, which is threaded through its central hole on the shaft and is fixed to the polygonal hub by means of axial securing screws screwed into threaded holes in the body of the polygonal hub, or by means of KM locking nuts, etc. The disadvantage of the solution according to CZ2015875A3 is mainly the fact that it is limited only to securing the cam on a hub, between the rear side of which and the free end of the shaft there is no other component, e.g., another hub, which would prevent the locking ring from being threaded through its central hole onto the shaft. This disadvantage is particularly apparent when using a cylindrical shaft economically made together with at least three hubs from a single piece of material, typically a cylindrical shaft with a trio of hubs to accommodate a trio of discs between which the pulleys of the carousel of the stepper transmission mechanism are arranged.

The object of the invention is to eliminate or at least reduce the drawbacks of the background art and provide an assembly of a shaft and at least two action members, which will be easily and repeatedly replaceable, with the assembly exhibiting high and long-lasting resistance to squeezing out the conical polygonal contact surfaces of the seats of the action members on the shaft, even when subjected to large and/or dynamic torques.

### Summary of invention

The object of the invention is achieved by an assembly of a shaft and at least two action members, which are mutually interconnected by at least one pulling means for pulling the action members to each other and pressing the action members with their conical polygonal contact surfaces against the conical polygonal contact surfaces on the shaft. The advantage of such an assembly is the precise axial and radial seating of the action members on the shaft, which is stable in the long term, can be repeatedly disassembled and is highly resistant to squeezing out the conical polygonal contact surfaces by torque. Another advantage of such an assembly is that holes or openings for the pulling means formed in the shaft body, e.g. in the body of a hub arranged on the shaft, can be eliminated, thereby increasing the strength of the shaft. Due to the increase in strength, it is possible to incorporate a shaft, e.g., a conical shaft, a cylindrical shaft with a conical hub, etc., of a smaller diameter into the assembly, which not only saves material, but also reduces and thus shortens the machining times of the conical polygonal contact surfaces of the shaft and the action members. A further advantage is that the pulling means of such an assembly does not have to include a locking ring, which must be pulled over the free end of the shaft and further on the shaft to the respective action member. This is particularly advantageous for an economically feasible cylindrical shaft with three or more hubs for accommodating at least three spaced apart action members and/or other components, for example three discs of a carousel of a cam transmission mechanism.

Preferably, the pulling means comprises at least one screw to facilitate the tightening of the action members and to facilitate repeated disassembly and reassembly and tightening of the assembly elements, e.g., for replacement of worn out action members, etc.

For assemblies with a pair of action members arranged immediately next to each other, e.g. assemblies with a pair of arms, rocker arms, cams, etc., arranged immediately next to each other, it is advantageous if the pair of action members in the assembled state on the shaft is situated with their mutually adjacent front sides parallel to each other with a spacing of less than 1 mm, ideally less than 200 µm. The spacing between the front sides of the action members in the assembled state of the assembly, when the respective conical polygonal contact surfaces of the action members and the shaft are in planar contact with each other, allows the action members to be subsequently pulled together by the pulling means. This results in a predefined axial displacement of both action members along the shaft, in the direction of the expansion of the conical polygonal contact surfaces of the shaft, thereby creating a predefined increase in the contact pressure of the respective conical polygonal contact surfaces, which is limited/controlled by the mutual stop of the front sides, to prevent damage to the assembly elements due to excessive contact pressure.

In a preferred embodiment, pairs of action members of the assembly which are situated in the assembled state on the shaft of the assembly with their adjacent front sides parallel to each other with a spacing of less than 1 mm or less than 200 µm, together form one action element. As a result, all of the above advantages of the invention can also be achieved for an assembly arrangement with a single action member, without the need to incorporate action members and pulling means other than those mentioned above.

For assemblies with two action members arranged with a spacing ranging from units of mm to orders of magnitude of even tens or lower hundreds of mm, it is advantageous if the pulling means comprises at least one auxiliary member arranged between the two action members, wherein at least one action member abuts with one of its front sides on the adjacent front side of the auxiliary member and the two action members are detachably connected to the auxiliary member. Thus, a shaft assembly with at least two action members according to the present invention is achieved, without the two action members having to be arranged immediately next to each other.

The auxiliary part is formed by at least one, ideally at least two, cylindrical spacers, with the advantage of easy assembly of the spacer without the need to pull it over the shaft, in the case of at least two cylindrical spacers also with the advantage of their circumferentially uniform arrangement around the shaft for circumferentially uniform distribution of the action of the pulling means on the action members.

The auxiliary part consists of at least one prism, with the advantage of easy manufacturability.

The auxiliary part consisting of at least one prism, and at the same time being an element of the pulling means, forms the balancing member of the assembly of the shaft and the action members, with the advantages of minimizing the number of elements and reducing the length of the assembly.

### Brief description of drawings

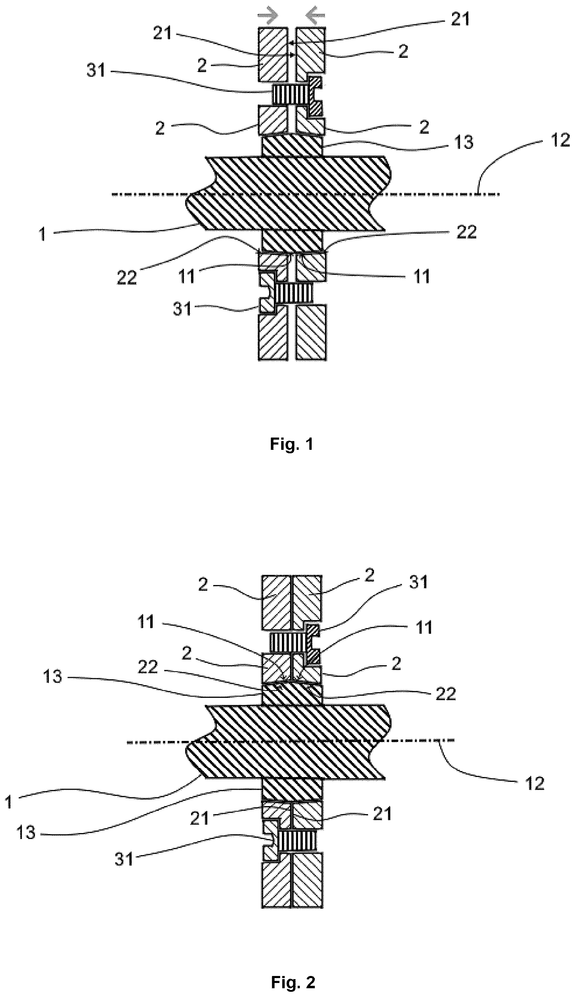

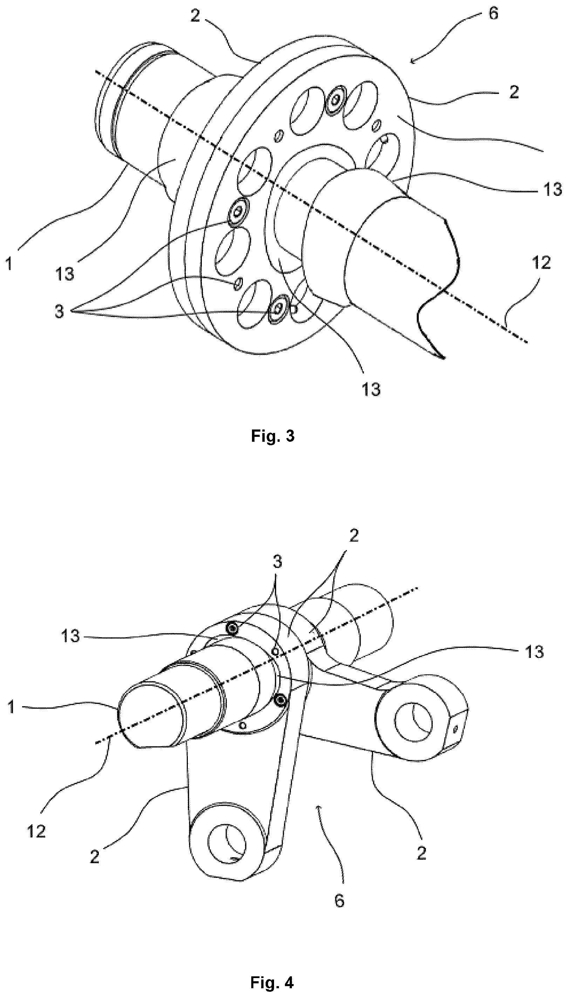

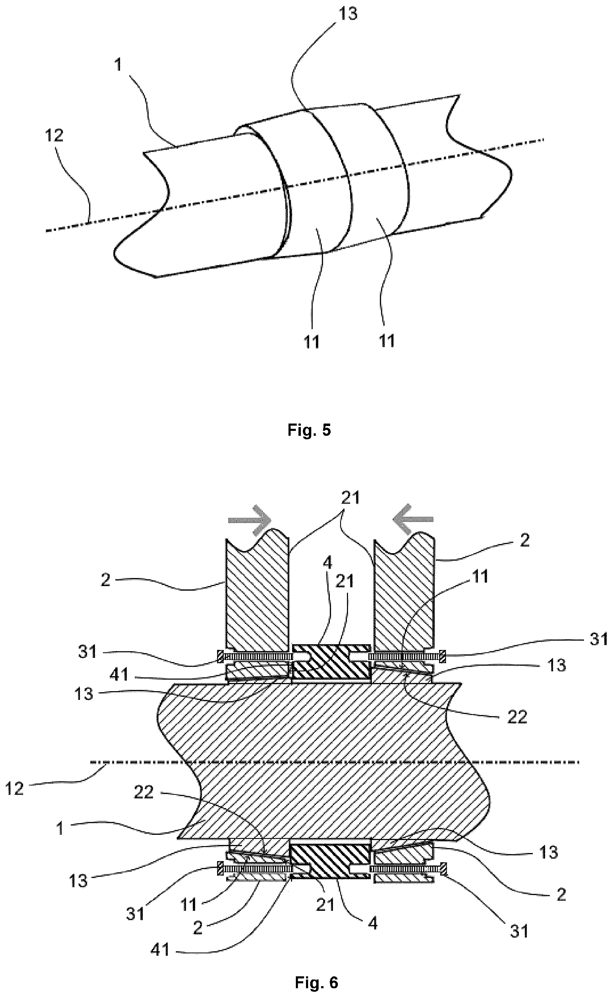

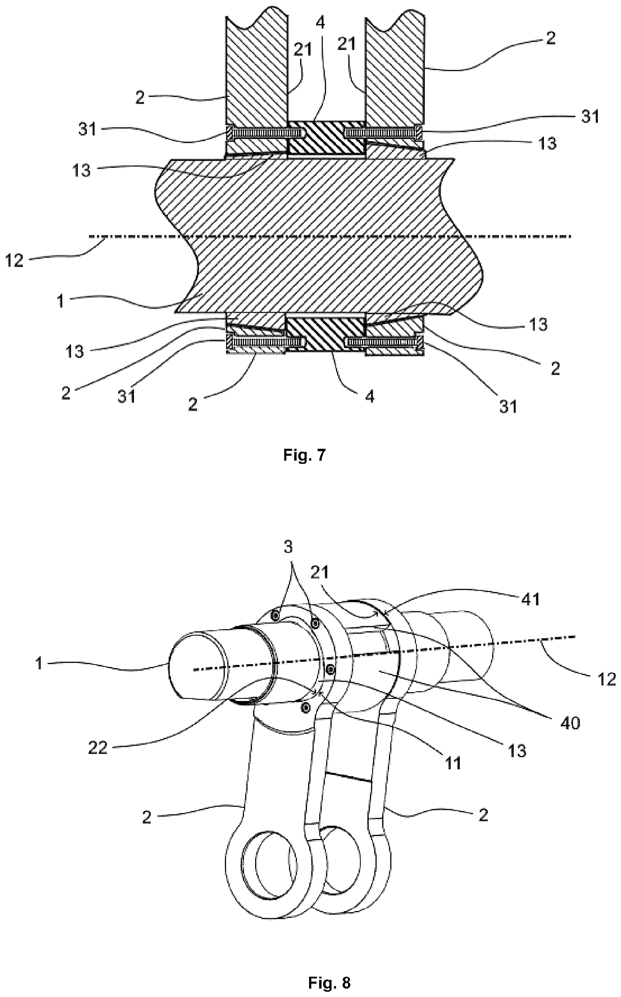

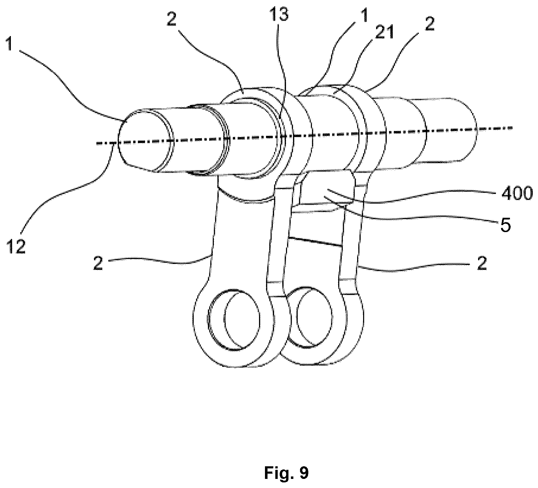

The invention is schematically shown in drawings, where Fig. 1 shows a longitudinal cross-section of the assembly before the action members are pulled together by the pulling means, Fig. 2 shows a longitudinal cross-section of the assembly of Fig. 1 after being pulled together by the pulling means, Fig. 3 is a perspective view of a single disc assembly formed by a pair of action members, Fig. 4 is a perspective view of an assembly with a pair of arms formed by a pair of action members, Fig. 5 is a perspective view of the shaft of the assembly shown in Fig. 4, Fig. 6 is a longitudinal cross-section of the assembly of the shaft with a pair of action members and an auxiliary part before the action members are pulled together by the pulling means, Fig. 7 is a longitudinal cross-section of the assembly of Fig. 6 after being pulled together by the pulling means, Fig. 8 is a perspective view of the assembly with an auxiliary means consisting of cylindrical spacers, Fig. 9 is a perspective view of the assembly with a balancing member.

### Examples of embodiment

The invention will be described with reference to several examples of embodiment which comprise a shaft 1 and at least two action members 2 mounted on the shaft 1 to transmit torque.

The assembly of the shaft 1 and at least two action members 2 (Figs. 1, 2, 3, 4, 6, 7, 8 and 9) comprises at least two action members 2, e.g., two arms, two radial cams etc., two action members forming together a double cam, a rocker arm, a disc, etc., each of which is provided with one conical polygonal contact surface 22 to be mounted on the conical polygonal contact surface 11 on the shaft 1, for example on a conical shaft 1, on a conical hub 13 of a cylindrical shaft 1, etc., for example, according to CZ2015875A3, to transmit torque. Two of the conical polygonal contact surfaces 11 on the shaft 1 are deflected from each other with an inclination towards the adjacent ends of the shaft 1 (Fig. 5), wherein the at least two action members 2 are mutually interconnected by at least one pulling means 3 to pull the action members 2 to each other and press the conical polygonal contact surfaces 22 of the action members 2 onto the conical polygonal contact surfaces 11 on the shaft 1.

In an exemplary embodiment of the assembly shown in Fig. 1, at least one pair of action members 2, in the assembled state on the shaft 1, is situated with their mutually adjacent front sides 21 parallel to each other with a spacing of less than 1 mm, preferably of less than 0.1 mm, more preferably of less than 200 µm, most preferably of less than 100 µm and more than 10 µm, to subsequently pull the action members 2 mutually to each other by the pulling means 3 (Fig. 2).

For example, the pair of action members 2, in the assembled state and after being pulled mutually tightly together, form one action element 6, e.g., one disc of a cam carousel (Fig. 3), one rocker arm (not shown), a radial double cam (not shown), etc.

In another embodiment, the pair of action members 2, in the assembled state and after being pulled tightly mutually to each other, form a pair of action elements 6, e.g., a pair of arms (Fig. 4) for connecting the assembly to an articulated mechanism, a pair of cams, rocker arms, discs, etc. (not shown).

The pulling means 3 (Figs. 1, 2, 6 and 7), is adapted to to pull mutually at least two action members 2 to each other, and thereby for linearly moving the action members 2 by the conical polygonal contact surfaces 22 over the conical polygonal contact surfaces 11 on the shaft 1, and thereby for pressing the conical polygonal contact surfaces 22 of the action members 2 against the conical polygonal contact surfaces 11 on the shaft 1.

In an exemplary embodiment shown in Figs. 6, 7, 8 and 9, the pulling means 3 comprises at least one screw 31 for being inserted through and/or screwed into a hole or opening in the body of the action member 2. In another unillustrated embodiment, the pulling means 3 comprises a nut, in another embodiment a clamp, etc.

The pulling means 3 in the exemplary embodiment shown in Figs. 6, 7, 8 and 9, comprises at least one auxiliary part 4, for example a cylindrical spacer 40 (Fig. 8), a prism 400 (Fig. 9), etc., which is arranged between the action members 2. At least one action member 2, after being pulled by the pulling means 3 (Fig. 7), abuts with one of its front sides 21 on the adjacent front side 41 of the auxiliary part 4 and both action members 2 are detachably connected to the auxiliary part 4.

In addition, the auxiliary part 4 of the pulling means 3, for example, forms a balancing member 5 for balancing the assembly of the shaft 1 and the action members 2, for example, a balancing member 5 in a cylindrical shape (not shown), in the shape of a prism (Fig. 9), etc.

The at least two action members 2 are placed and clamped on the shaft 1 of the assembly by first threading them with their central holes axially opposite each other onto the shaft 1, wherein each of the action members 2 is pulled over one of the two opposite free ends of the shaft 1 and is mounted with its conical polygonal contact surface 22 flatly and without a clearance on the corresponding conical polygonal contact surface 11 of the shaft 1, e.g., of a conical shaft 1, of a conical hub 13 of a cylindrical shaft 1, etc., thereby presetting the preselected radial orientation of the action members 2 on the shaft 1 (Figs. 1 and 6). In doing so, one front side 21 of the action member 2 is aligned to the front side 21 of the other action member 2 or is aligned to the front side 41 of the auxiliary part 4 with a spacing of less than 1 mm. Then, the action members 3 are pulled towards each other by the pulling means 3 using a preselected pulling force, each of the action members 3 linearly moving along the shaft 1 by a distance of 5 µm to 500 µm until the front side 21 of the action member 2 abuts on the front side 21 of the the other, opposite, action member 2 (Fig. 2) or on the front side 41 of the auxiliary part 4 arranged between the action members 2 (Fig. 7). At the same time, each of the pair of action members 2 moves with its conical polygonal contact surface 22rectilinearly in the direction of the axis 12 of the shaft 1 on the respective conical polygonal contact surface 11 of the shaft 1, in the direction of the expansion of its forming cone.

In this manner, the action member 2 with the conical polygonal contact surface 22 presses onto the conical polygonal contact surface 11 of the shaft 1, thereby increasing the contact pressure with which the action member 2, with its inner conical polygonal contact surface 22, exerts on the outer conical polygonal contact surface11 of the shaft 1 in a controlled manner, or, in other words, the contact tension of these contact surfaces 22, 11 increases over the long term, and thus the action member 2 is firmly clamped on the shaft 1 over the long term, to increase the resistance of the assembly of the shaft 1 and the action members 2 against squeezing out the conical polygonal contact surfaces 22, 11. The pulling means 4 is left tightened to secure the action members 2 against unwanted release and the associated unwanted reduction in the contact pressure/contact tension of the conical polygonal contact surfaces 22, 11.

### List of references

- 1: shaft
- 11: conical polygonal contact surface
- 12: axis
- 13: hub
- 2: action member
- 21: front side
- 22: conical polygonal contact surface
- 3: pulling means
- 31: screw
- 4: auxiliary part
- 40: cylindrical spacer
- 400: prism
- 41: front side
- 5: balancing member
- 6: action element

## Claims

1. An assembly of a shaft (1) and at least two action members (2), each of which is provided with one conical polygonal contact surface (22), with which the action members (2) are mounted on corresponding conical polygonal contact surfaces (11) on the shaft (1) for transmitting torque, wherein two of the conical polygonal contact surfaces (11) on the shaft (1) are deflected from each other with an inclination towards adjacent ends of the shaft (1), **characterized in that** the at least two action members (2) are mutually interconnected by at least one pulling means (3) to pull the action members (2) together and to press the action members (2) with their conical polygonal contact surfaces (22) onto the conical polygonal contact surfaces (11) on the shaft (1).

2. The assembly of the shaft (1) according to claim 1, **characterized in that** the pulling means (3) comprises at least one screw (31).

3. The assembly of the shaft (1) according to claim 1 or 2, **characterized in that** at least one pair of action members (2) is, in in the assembled state, situated on the shaft (1) with their mutually adjacent front sides (21) parallel to each other with a spacing of less than 1 mm, more preferably less than 200 µm.

4. The assembly of the shaft (1) according to claim 3, **characterized in that** the pair of action members (2) together form one action element (6).

5. The assembly of the shaft (1) according to claim 3, **characterized in that** the pulling means (3) comprises at least one auxiliary part (4), which is arranged between the action members (2), wherein at least one action member (2) abuts with one front side (21) on the adjacent front side (41) of the auxiliary part (4) and the two action members (2) are detachably connected to the auxiliary part (4).

6. The assembly of the shaft (1) according to claim 5, **characterized in that** the auxiliary part (4) is formed by at least one cylindrical spacer (40).

7. The assembly of the shaft (1) according to claim 5, **characterized in that** the auxiliary part (4) is formed by at least one prism (400).

8. The assembly of the shaft (1) according to claim 5 to 7, **characterized in that** the auxiliary part (4) also forms a balancing member (5) of the assembly of the shaft (1) and the action members (2).
